# EUROPÄISCHE PATENTSCHRIFT

(11) **EP 0 687 402 B1**
(45) Veröffentlichungstag und Bekanntmachung des Hinweises auf die Patenterteilung: **08.04.1998**
(21) Anmeldenummer: 94908280.4
(22) Anmeldetag: 26.02.1994
(51) Int. Cl.: H04Q 11/04

(54) **SCHALTUNGSANORDNUNG ZUR INTEGRATION VON EDV-SYSTEMEN BEI DER BENUTZUNG VON TELEFONANLAGEN**
CIRCUIT ARRANGEMENT FOR INTEGRATING EDP SYSTEMS IN THE USE OF TELEPHONE INSTALLATIONS
CIRCUIT PERMETTANT D'INTEGRER DES SYSTEMES INFORMATIQUES DANS LE CADRE DE L'UTILISATION D'INSTALLATIONS TELEPHONIQUES

(30) Priorität: 05.03.1993 DE 9303214 U
(43) Veröffentlichungstag der Anmeldung: 20.12.1995
(73) Patentinhaber: CSB-System Software-Entwicklung & Unternehmensberatung GmbH, D-52511 Geilenkirchen (DE)
(72) Erfinder: THOMAS, Gottfried, D-41836 Hückelhoven (DE); MERGEMANN, Ulrich, D-50259 Pulheim (DE)
(74) Vertreter: Haussingen, Peter
(86) Internationale Anmeldenummer: DE9400229
(87) Internationale Veröffentlichungsnummer: WO9421091

(56) Entgegenhaltungen:
- EP-A- 0 582 877
- DE-A- 4 101 885
- DE-A- 4 221 474
- 6TH MEDITERRANEAN ELECTROTECHNICAL CONFERENCE, 22. Mai 1991, LJUBLJANA, YU Seiten 558 - 561, XP000289513 C.SERRO ET AL. 'Services Architecture in SEIS - A System for Intelligent Buildings'
- PATENT ABSTRACTS OF JAPAN vol. 16, no. 354 (E-1242) 30. Juli 1992 & JP,A,04 111 557 (CANON) 13. April 1992

## Beschreibung

Die Erfindung betrifft eine Schaltungsanordnung zur Integration von EDV-Systemen bei der Benutzung von Telefonanlagen, die an das öffentliche Telefonnetz ISDN oder Euro ISDN angeschlossen sind.

Mit der Entwicklung der Datenerfassung, ihrer Aufbereitung, ihrer Auswertung und nicht zuletzt mit ihrer Anwendung, erhöhte sich der dazu erforderliche Kommunikationsbedarf. Es besteht die dringende Aufgabe wirtschaftliche Lösungen zu finden, die neue Wege zur Integration von Sprach- und Daten-Kommunikations-Systemen beinhalten.

Bis heute konnten nur Teil- und Insellösungen in der PC-TK-Anlagen-Verbindung zufriedenstellend realisiert werden. Die derzeit vorherrschenden Sprach- und Daten-Kommunikations-Systeme sind überwiegend durch manuelle Tätigkeit und Sprachkommunikation gekennzeichnet, die zeitaufwendig und mit einer hohen Verlustquote belastet sind. So ist heute allgemein Brauch, daß Sprach- und Datenkommunikationen in der Weise erfolgen, daß mittels Telefon der Anrufer den kompetenten Gesprächsteilnehmer ermittelt, daß sie sich dann Daten und Informationen austauschen, die zur gegenseitigen Identifikation notwendig sind und die die Basis der nachfolgend gewünschten Sprach- und Datenkommunikation des Anrufers bilden.

Der kompetente Gesprächsteilnehmer ermittelt die vorn Anrufer gewünschten Daten und Informationen iiber seinen Computer oder speichert zusätzliche Daten und Informationen des Anrufers in diesem. Werden darüber hinaus Daten und Informationen benötigt, die nicht beim kompetenten Teilnehmer vorliegen, so ist der zuständige Bearbeiter als weiterer kompetente Teilnehmer in diese Sprach- und Datenkommunikation in gleicher Weise, wie zuvor geschildert, einzubeziehen. Der Nachteil dieser Sprach- und Datenkommunikation liegt darin, daß dieser zu zeitaufwendig ist, daß durch die Sprachübermittlung und durch die manuelle Bedienung des Computers eventuell unvollständige und fehlerhafte Informationen übermittelt werden. Weiterhin ist kein datengesteuerter Verbindungsaufbau möglich mit
- den Vermittlungsfunktionen
- Verbinden
- Umkoppeln
- Auslösen
- Rückfrage einleiten
- Melden
- dem Überwachungssystem
- dem Abfragen des Verbindungszustandes
- Trennen
- Übergeben
- Makeln
- Mehrfachkonferenzschaltung ein leiten
- dem Ermitteln des Teilnehmerzustandes
- der Steuerungsfunktion für die Leistungsmerkmale paralleler bzw. gleichzeitiger Fax-Übertragung und Datenübertragung bei laufender Sprach- und Datenkommunikation

Ein Telefondatendienst bezüglich Steuerungen digitaler Telefonapparate mit der Dateneingabe über ein Telekommunikations- und Informationssystem und Identifikation des Anrufers über ISDN oder Euro-ISDN im heutigen 1TR6-Protokoll bzw. im zukünftigen EDSS1-Protokoll ist nicht abzusichern. Weitere Nachteile sind, daß Daten und Informationen, die teilweise in großer Anzahl anliegen, nicht bei dieser Sprach und -Datenkommunikation gegenseitig übermittelt werden können. Eine solche Übermittlung erfolgt dann im Nachgang durch Postsendung oder durch Fax-Übermittlung. Das bedeutet wiederum Zeitverlust und Verzögerung bei dringender Entscheidungsfindung. Weiterhin sind Lösungen bekannt, die eine teilweise rationelle Sprach- und Datenkommunikation zulassen, indem hochwertige Telefonapparate (spezielle) eingesetzt sind. Jeder Telefonapparat ist über eine kostenaufwendige Steckkarte, die mit einer eigens dafür entwickelten Software arbeitet, jeweils nur mit einem Computer verbunden. Neben dem finanzicllen hohen Aufwand ist eine solche Lösung mit weiteren Nachteilen verbunden. Die Nachteile bestehen in der Nichtdurchführbarkeit von Konferenzschaltungen unter Einbeziehung von mehren Teilnehmern, insbesondere bei der Datenübertragung. Eine direkte Datenübertragung vom kompetenten Teilnehmer zum Anrufer bzw. umgekehrt sowie die Steuerung digitaler Telefonapparate mit der Dateneingabe über ein Telekommunikations- und Informationssystem und die Identifikation des Anrufers über ISDN oder Euro ISDN im heutigen 1TR6-Protokoll bzw. im zukünftigen EDSS1-Protokoll ist nur mit einem Telefonapparat und dem jeweils angeschlossenen Computer möglich.

Nach DE-OS 4101885 ist eine Telekommunikationsanlage, insbesondere eine Telefonanlage, bekannt, die eine Vermittlungsanlage mit Endgeräten aufweist und an einem Computer zur erleichterten oder zusätzlichen Abwicklung von computerunterstützten Kommunikationsdiensten angeschlossen ist. Sie zeichnet sich dadurch aus, daß der Computer integraler Baustein der Telekommunikationsanlage ist und eine Schnittstelle aufweist, die nicht für Telekommunikationsdienste, sondern für externe Computerdienste zur Verfügung steht. Diese Lösung ist mit den Nachteilen verbunden, daß sie nicht alle Funktionen der TK-Anlage von jedem im Netz befindlichen Computer nutzen und bedienen kann, so daß von jedem im Netz befindlichen Rechner nicht jede Art von Kommunikation erzeugt werden kann (Sprach- und Datenkommunikation und Bildübertragung).

Nach der Offenlegungsschrift DE 42 21 474 ist ein Kommunikationssystem für Mehrdienste-Kommunikationseinrichtungen in lokalen Netzen (LAN) mit nachstehenden wesentlichenMerkmalen bekannt und behaftet:
Jede Verbindungsleitung zum Telefonendgerät wird von der Kommunikationsanlage zu TLE bis TLE über die Schmalbandnetze TAS bis TAS oder gebündelt über das Breit band verbunden, dann muß die APE Multiplexfunktionen übernehmen."

Die Funktion dieser Lösung ist dadurch charakterisiert, daß die APE eine Umsetzung der Sprachdaten in Digitaldaten vornimmt, wobei gleichzeitig über die LANZ die Zusammenführung dieser mit den EDV-Daten über ein Verkabelungssystem in ein Endnetz ATK geschieht und die Endgeräteteilnehmer KE erhalten die Sprache und die Daten über eine Leitung an Endgeräten zur Verfügung gestellt.

Dies geschieht wie folgt:

Im APE werden die Sprachdaten aus der KA über TAS bis TAS und über TLE bis TLE an AE und von AE an LANZ geleitet. Im APE erfolgt somit die Protokollumsetzung (Protokolländerung). Es wird somit aus dem KA-Protokoll ein EDV-fähiges Protokoll.

Dem Endanwender werden somit über eine einzige Leitung Sprache und Daten zur Verfügung gestellt.

Diese Lösung ist mit den Nachteilen behaftet, daß
- ein hoher physikalischer Aufwand im Aufbau zwischen KA und APE (hohe Störanfälligkeit) gegeben ist,
- ein hoher logischer Aufwand wegen Protokollumsetzung in der APE und in der AE vorliegt,
- eine Engpaßsituation aufder Schicht LANZ bei hoher Teilnehmerzahl im Netz (z.B. bei 1 000 Teilnehmern) vorhanden ist,
- eine Engpaßsituation im EDV-Netz über die Steuereinrichtung STE auf Schicht ATK durch die Zusammenführung von n-Sprachdaten mit n-EDV-Daten vorliegt. Es kommen somit am Endgerät (Endgerät ist ein Sprach- und Datengerät) Sprach- und EDV-Daten über eine Leitung gemeinsam an und müssen um EDV- und telefongerechte Leistungsmerkmale aufzuweisen in die ent
   entsprechenden Protokollstrukturen umgesetzt werden (somit besteht ein erheblicher logischer Aufwand),
- diese Lösung mit Risiko behaftet ist, denn, wenn ein Element dieser Schaltungsanordnung z.B. AE, LANZ, APE, ATK, STE oder LANZ ausfällt, so können weder die Sprache, d.h.das Telefonieren, noch EDV-Daten, d.h. die EDV-Anlage, weiter betrieben werden. Somit ist ein Totalausfall gegeben.

Erfindungsgemäß wird die Aufgabe durch die in dem Patentanspruch 1 angegebenen Merkmale gelöst.

Bevorzugte Weiterbildungen der Erfindung ergeben sich aus den Unteransprüchen. Die Vorteile der Erfindung bestehen darin, daß man eine Telefonanlage an eine EDV-Anlage derart anbinden kann, daß alle Funktionen des EDV-Systems während der Benutzung der Telefonanlage eingesetzt werden können.

Sie gewährleistet einen datengesteuerten Verbindungsaufbau mit:
- den Vermittlungsfunktionen
- Verbinden
- Umkoppeln
- Auslösen
- Rückfragen einleiten
- Trennen
- Übergeben
- Makeln
- Mehrfachkonferenz einschalten
- Melden
- dem Überwachungssystem
- dem Abfragen des Verbindungszustandes
- der Ermittlung des Teilnehmerzustandes
- der Steuerungsfunktion für die Leistungsmerkmale
- paralleler bzw. gleichzeitiger Fax-Übertragung und Datenübertragung bei laufender Sprach- und Datenkommunikation

Weiterer Vorteile der Erfindung sind die Steuerung digitaler Telefonapparate mit der Dateneingabe über ein Tele-Kommunikations- und Informationssystem und die Identifikation des Anrufers über ISDN oder Euro-ISDN im heutigen lTR6-Protokoll bzw. im zukünftigen EDSS1-Protokoll. Bei Ausfall des LAN kann die Sprachkommunikation fortgeführt werden. Zum Betreiben dieses Sprach- und Daten-Kommunikationssystems sind einfache Telefonapparate ohne Mehrfunktionen erforderlich. Nachstehende weitere Leistungsmerkmale sind als Vorteile anzuführen:
- die Lösung hat gegenüber den bestehenden Standardausführungen keinen zusätzlichen physikalischen Aufwand, es werden ausschließlich bestehende Standardschnittstellen der TK genutzt,
- kein zusätzlicher logischer Aufwand, alle Protokolle bleiben unverändert,
- keine Engpaßsituation für Teilnehmer, da beide Systeme (Telefonnetz und EDV-Anlage) jeweils für sich getrennt genutzt werden,
- kein zusätzliches Risiko durch die schaltungstechnische Integration eines Integrationselementes, fällt ein beliebiges Element des Integrationselementes aus, so bleibt die Funktion des Telefonnetzes und der EDV-Anlage jeweils für sich erhalten (störungslose Betriebsbereitschaft ). Höchstmöglichste Anwendersicherheit,
- der komplette Investitionsschutz für Betriebssysteme für die EDV-Hardware und für die TK-Anlage ist gegeben, wobei die neuen Anschaffungen lediglich standardisierte Ergänzungen aufweisen, wie z.B. in Form von einem
   - Integrationselement und
   - Schnittstelle zum Telefonnetz und EDV-Anlage.

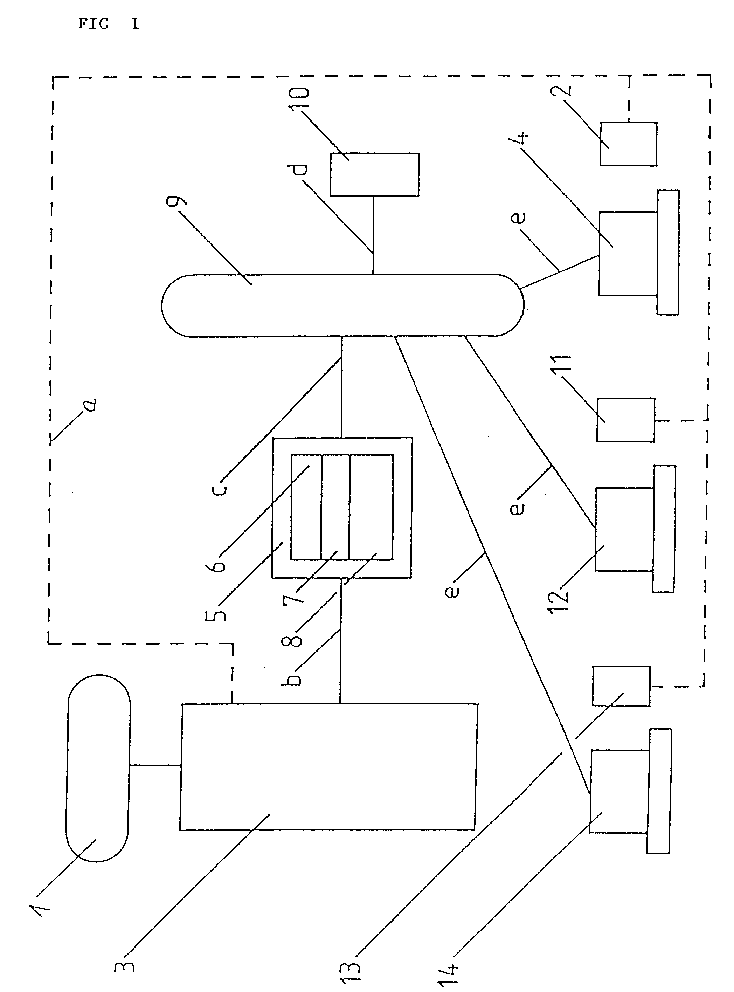

Die Erfindung wird nachstehend anhand der Figur 1 erläutert.

Zur Bewältigung des steigenden Kommunikationsbedarfes ist es erforderlich, daß die Sprach- und Daten-Kommunikations-Systeme wirtschaftlicher gestaltet werden und hier ist der Bedarf nach einem Integrationssystem am akutesten.

Die in Figur 1 dargestellte Schaltungsanordnung zur Integration von EDV-Systemen bei der Benutzung von Telefonanlagen wird zur Verdeutlichung an einer intelligenten Telefonanlage gezeigt, die an das öffentliche Telefonnetz ISDN oder Euro-ISDN nach außen und nach innen sowohl über das LAN mit drei Personalcomputern als auch mit drei Telefonapparaten verbunden ist. Es sei jedoch betont, daß diese Schaltungsanordnung auch mit eigens dafür vorgesehener Software für analoge Telefonanlagen einsetzbar ist.

Wenn ein Anrufer über das öffentliche Telefonnetz ISDN oder Euro-ISDN 1 einen kompetenten Teilnehmer des Telefonapparates 2 anwählt und die Verbindung ist hergestellt, dann erfolgt die Verbindung über eine intelligente Telefonanlage 3 und über eine Leitung a mit dem Telefonapparat 2 direkt.

Gleichzeitig wird mit dem Personalcomputer 4, der dem Telefonapparat 2 zugeordnet ist, eine Verbindung zur intelligenten Telefonanlage 3 über eine Leitung b, einem Integrationselement 5, das aus einem Rechnersystem 6, aus einer Software 7 und aus einem SDLC- oder ISDN-Verbindungselement 8 mit einer internen Software besteht, einer Leitung c, ein LAN 9 unter Einbeziehung des LAN-Server 10 mittels Leitung d und einer Leitung e hergestellt. Mit dieser Verbindung wird jede Wahlfunktion hergestellt, der ankommende Ruf ist identifiziert und alle erforderlichen Daten werden am Personalcomputer 4 angezeigt. Dies wird durch das Integrationselement 5 in der Weise bewirkt, daß beim Anliegen eines Rufes am Telefonapparat 2 sofort von der intelligenten Telefonanlage 3 dem Integrationselement 5 ein Signal über die Leitung b übergeben wird, das vom Integrationselement 5 in einem Datensatz, mit entsprechenden Informationen versehen, über das LAN 9 an den zugehörigen Personalcomputer 4 übergibt. Hierbei ist es möglich, aus dem LAN-Server 10 und dessen Datenbank direkt den Anrufer zeitgleich mit dem eingehenden Ruf Daten und Informationen zu übergeben. Ist der vom Anrufer angewählte Teilnehmer mit dem Telefonapparat 2 nicht der kompetente Teilnehmer, dann kann dieser durch Bedienung der Tastatur seines Personalcomputers 4 und durch die Vermittlung eines Datensatzes über die Leitung e, das LAN 9 über die Leitung c an das Integrationselement 5 veranlassen, daß durch von dem Integrationselement 5 erzeugtem Signal, daß über die Leitung b an die intelligente Telefonanlage 3 und von dort über die Leitung a der kompetente Teilnehmer z.B. Telefonapparat 11 gerufen wird. Auch hier werden sofort nach erfolgter Verbindung auf dessen Personalcomputer 12 alle notwendigen Daten angezeigt, ausgelöst durch Signale der intelligenten Telefonanlage 3, die in dem Integrationselement 5 zu einem Datensatz umgewandelt und über das LAN 9 unter Einbeziehung der Datenbank des LAN-Servers 10 und den entsprechenden Leitungen c; d; e an den Personalcomputer 12 gesandt worden und die notwendige Kommunikation kann sofort erfolgen. Benötigt der angerufene bzw. der weiter vermittelte kompetente Teilnehmer z.B. am Telefonapparat 11 die Einbeziehung von einem weiteren kompetenten Teilnehmer oder mehreren kompetenten Teilnehmern zur Abklärung von Fragen und Daten des Anrufers, dann kann er durch die Bedienung der Tastatur des eigenen Personalcomputers 12 und durch Übermittlung eines Datensatzes in gleicher Weise wie oben dargestellt, über die intelligente Telefonanlage 3 diese kompetenten Teilnehmer in Konferenz durch Herstellung der Verbindung einbeziehen, so daß alle Telefonapparate 2; 11; 13 und Personalcomputer 4; 12; 14 in Verbindung stehen. Wobei dann auch von allen an der Konferenz beteiligten Daten und Informationen zum Anrufer und vom Anrufer an die an der Konferenz Beteiligten übermittelt werden können. Eine Übermittlung von Daten zwischen den kompetenten Teilnehmern ist ebenfalls möglich, ungeachtet dessen, ob ein Anrufer in die Sprach- und Datenkommunikation einbezogen ist oder nicht.

Parallel zur oben genannten Sprach- und Datenkommunikation besteht die Möglichkeit, daß jeder kompetente Teilnehmer dem Anrufer ein Fax übermitteln kann.

Diese gleichzeitige bzw. parallele Faxübermittlung neben der laufenden Sprach- und Datenkommunikation wird über die Verbindung des jeweiligen Personalcomputers 4; 12 oder 14 gleichzeitig über die Leitung e mit dem LAN 9 unter Einbeziehung des LAN-Servers 10 über die Leitung d, über die Leitung c mit dem Integrationselement 5, das aus dem Rechnersystem 6, aus der Software 7 und dem SDLC- oder ISDN-Verbindungselement 8 mit einer internen Software besteht und über die Leitung b mit der intelligenten Telefonanlage 3 dem öffentlichen Telefonnetz ISDN oder Euro-ISDN und somit mit dem Anrufer vorgenommen, indem die Tastatur des Personalcomputers 4; 12 oder 14 bedient wird.

### Verwendete Bezugszeichen

- 1.: öffentliches Telefonnetz ISDN oder Euro-ISDN
- 2.: Telefonapparat beim Personalcomputer 4
- 3.: intelligente Telefonanlage
- 4.: Personalcomputer beim Telefonapparat 2
- 5.: Integrationselement
- 6.: Rechnersystem
- 7.: Softwareschicht
- 8.: SDLC- oder ISDN-Verbindungselement
- 9.: LAN
- 10.: LAN-Server
- 11.: Telefonapparat beim Personalcomputer 12
- 12.: Personalcomputer beim Telefonapparat 11
- 13.: Telefonapparat beim Personalcomputer 14
- 14.: Personalcomputer beim Telefonapparat 13

- a; b; c; d; e: Leitungen

## Patentansprüche

1. Schaltungsanordnung zur Integration von EDV-Systemen bei der Benutzung von Telefonanlagen, die an das öffentliche Telefonnetz ISDN oder Euro ISDN (1) angeschlossen sind, bestehend aus
- den Telefonapparaten (2; 11; 13), die über eine Leitung (a) und einer intelligenten Telefonanlage (3) mit dem öffentlichen Telefonnetz ISDN oder Euro ISDN (1) direkt verbunden sind, dadurch gekennzeichnet, daß
ein Integrationselement (5), das zwischen der intelligenten Telefonanlage (3) und den Personalcomputern (4; 12; 14) angeordnet ist, aus einem Rechnersystem (6), aus einer Softwareschicht (7) und aus einem SDLC- oder ISDN- bzw. Euro ISDN - Verbindungselement (8) mit einer internen Software besteht und einmal über das SDLC- oder ISDN-Verbindungselement (8) mittels Leitung (b) von dem öffentlichen Telefonnetz ISDN oder Euro ISDN (1) über die intelligente Telefonanlage (3) Signale empfängt und Signale zurück an das öffentliche Telefonnetz ISDN oder Euro ISDN (1) gibt und zum anderen über die Leitung (c), über ein LAN (9), das durch die Leitung (d) mit einem LAN-Server (10) verbunden ist, und über die Leitung (e) einen Datensatz, mit entsprechenden Informationen versehen, an die Personalcomputcr (4; 12; 14) übergibt und den Datensatz der Personalcomputer (4; 12; 14) wieder empfängt, wobei die Umwandlung der Signale in den Datensatz und umgekehrt vom Integrationselement (5) durch das Rechnersystem (6), die Softwareschicht (7), und durch das SDLC- oder ISDN-Verbindungselement (8) mit der internen Software vorgenommen wird, wobei die Telefonapparate (2; 11; 13) nicht über das Integrationselement (5) und die Personalcomputer (4; 12; 14) über das Integrationselement (5) mit der intelligenten Telefonanlage (3) verbunden sind.

2. Schaltungsanordnung nach Anspruch (1), dadurch gekennzeichnet, daß die Sprach- und Datenkommunikation zwischen einem Anrufer über das öfllentliche Telefonnetz ISDN oder Euro ISDN (1) und einem kompetenten Teilnehmer an einem der Telefonapparate (2; 11; 13) mit dem jeweils zugeordneten Personalcomputer (4; 12; 14) an einem weiteren kompetenten Teilnehmer übergeben und von diesen wieder zurück gegeben werden kann, oder/und daß die anliegende Sprach- und Datenkommunikation im Bedarfsfall gemeinsam mit dem weiteren kompetenten Teilnehmer, aber auch mit allen Teilnehmern der Telefonapparate (2; 11; 13) in Konferenz geführt werden kann, nachdem jeweils der betreffende, kompetente Teilnehmer über seinen jeweils zugeordneten Personalcomputer (4; 12; 14) durch die Bedienung der Tastatur einen Datensatz, mit entsprechenden Informationen versehen, an das integrationselement (5) gegeben hat, liegt das notwendige Signal, das vom Integrationselement (5) ausgeht, an der intelligenten Telefonanlage (3) an und die Verbindung zu einem weiteren Telefonapparat bzw. zu allen Telefonapparaten ist hergestellt; wobei die Verbindung mit jedem Telefonapparat gleichzeitig eine sofortige Integration des dem Telefonapparat zugeordneten Personalcomputers in die hergestellte Sprach- und Datenkommunikation bedeutet.

3. Schaltungsanordnung nach Anspruch 1 und Anspruch 2, dadurch gekennzeichnet, daß bei anliegender Sprach- und Datenkommunikation Daten von jedem kompetenten Teilnehmer, auch während der Konferenz und von allen kompetenten Teilnehmern, sowohl an den Anrufer und vom Anrufer an jeden beteiligten kompetenten Teilnehmer, als auch zwischen den kompetenten Teilnehmern, mit und ohne Anrufer übermittelt werden können.

4. Schaltungsanordnung nach Anspruch 1 bis Anspruch 3, dadurch gekennzeichnet, daß neben der bestehenden Sprach- und Datenkommunikation gleichzeitig bzw. parallel eine Faxübermittlung zwischen dem jeweils kompetenten Teilnehmer und dem Anrufer mittels Tastatur des jeweiligen Personalcomputer (4; 12; 14) vorgenommen werden kann, indem die Verbindung des jeweiligen Personalcomputers (4; 12; 14) mit dem öffentlichen Telefonnetz ISDN oder Euro ISDN über die Leitung (e) mit dem LAN (9) unter Einbeziehung des LAN-Servers (10) über die Leitung (d), über die Leitung (c) mit dem Integrationselement (5), das aus dem Rechnersystem (6), aus der Software (7) und dem SDLC- oder ISDN-Verbindungselement (8) mit der internen Software besteht und über die Leitung (b) mit der intelligenten Telefonanlage (3) genutzt wird.

## Claims

1. Circuit arrangement for integration of EDP systems in the use of telephone systems which are connected to the public ISDN or Euro ISDN telephone network (1), consisting of
- the telephones (2; 11; 13) which are connected directly by a line (a) and an intelligent telephone system (3) to the public ISDN or Euro ISDN (1) telephone network characterized by an integration element (5) being connected between the intelligent telephone system (3) and the personal computers (4; 12; 14), consisting of a computer system (6), a software layer (7) and an SDLC or ISDN or Euro ISDN connecting element (8) with an internal software and which, on the one hand, receives signals from the public ISDN or Euro ISDN telephone network (1) through the intelligent telephone system (3) via the SDLC or ISDN connecting element (8) by a line (b) and sends signals back to the ISDN or Euro ISDN public telephone network (1) and which, on the other hand, transfers a dataset with the appropriate information to the personal computers (4; 12; 14) via the line (c), through a LAN (9) which is connected to a LAN server (10) by the line (d) and via the line (e) and receives the dataset of the personal computers (4; 12; 14) again, whereby the conversion of the signals into the dataset and vice versa is accomplished by the integration element (5) through the computer system (6), the software layer (7) and through the SDLC or ISDN connecting element (8) with the internal software, whereby the telephones (2; 11; 13) are not connected to the intelligent telephone system (3) via the integration element (5) and the personal computers (4; 12; 14) are connected via the integration element (5).

2. Circuit arrangement according to claim (1) characterized by the fact that the voice and data communication between a caller and a competent party over the public ISDN or Euro ISDN telephone network (1) on one of the telephones (2; 11; 13) can be transferred to another competent partner with the respectively assigned personal computer (4; 12; 14) and returned by this or/and the available voice and data communication can be held in a conference if required together with the other competent parties but also with all parties of the telephones (2; 11; 13), after the respective competent party concerned has sent a dataset with the appropriate information to the integration element (5) with his respectively assigned personal computer (4; 12; 14) by operating the keyboard, the necessary signal from the integration element (5) is available at the intelligent telephone system (3) and the connection to another telephone or to all telephones is made; whereby the connection to every telephone also means an immediate integration of the personal computer assigned to the telephone in the generated voice and data communication.

3. Circuit arrangement according to claim I and claim 2 characterized by data being transferrable during voice and data communication front every competent party, even during the conference and by all competent parties, both to and from the caller to every participating competent party and between the competent parties with and without caller.

4. Circuit arrangement according to claim I to claim 3 characterized by a fax being transmittable simultaneously with or parallel to the voice and data communication between the respective competent parties and the caller by means of the keyboard of the respective computer (4; 12; 14) by using the connection of the respective personal computer (4; 12; 14) with the ISDN or Euro ISDN public telephone network via the line (e) with the LAN (9) incorporating the LAN server (10) via the line (d), via the line (c) with the integration element (5) which consists of the computer system (6), the software (7) and the SDLC or ISDN connecting element (8) with the internal software and via the line (b) with the intelligent telephone system (3).

## Revendications

1. Circuit d'intégration de systèmes informatiques pour l'utilisation d'installations téléphoniques raccordées au réseau téléphonique public RNIS ou Euro RNIS (1) comprenant :
- les appareils téléphoniques (2, 11, 13) connectés directement au réseau téléphonique public RNIS ou Euro RNIS (1) par l'intermédiaire d'une installation téléphonique intelligente (3), caractérisé en ce qu'un élément d'intégration (5) disposé entre l'installation téléphonique intelligente (3) et les ordinateurs personnels (4; 12; 14) est constitué d'un système de calculateur (6), d'une couche logiciel (7) et d'un élément de liaison (8) SDLC ou RNIS ou Euro RNIS avec un logiciel interne et reçoit d'une part des signaux du réseau téléphonique public RNIS ou Euro RNIS (1) via l'élément de liaison SDLC ou RNIS (8) par l'intermédiaire de la ligne (b) et retourne des signaux au réseau téléphonique public RNIS ou Euro RNIS (1) et transmet d'autre part aux ordinateurs personnels (4; 12; 14) un article de données comportant des informations appropriées par la ligne (c), via un réseau local RLE (9), connecté par la ligne (d) au serveur RLE (10) et reçoit à nouveau l'article de données des ordinateurs personnels (4; 12; 14), la conversion des signaux en article de données et inversement étant assurée par l'élément d'intégration (5) par l'intermédiaire du système de calculateur (6), de la couche logiciel (7) et de l'élément de liaison SDLC ou RNIS (8) avec le logiciel interne, les appareils téléphoniques (2; 11; 13) n'étant pas connectés à l'installation téléphonique intelligente (3) par l'élément d'intégration (5) et les ordinateurs personnels (4; 12; 14) étant connecté à cette installation par l'élément d'intégration (5).

2. Circuit selon la revendication (1), caractérisé en ce que la communication vocale et de données entre un appelant, via le réseau téléphonique public RNIS ou Euro RNIS (1) et un abonné compétent, à l'un des appareils téléphoniques (2; 11; 13), avec l'ordinateur personnel affecté (4; 12; 14) peut être transmise à un autre abonné compétent qui peut la retransmettre ou/et en ce que la communication vocale et de données peut être menée, si nécessaire, en conférence avec l'autre abonné compétent, mais également avec tous les abonnés des appareils téléphoniques (2; 11; 13); après que l'abonné compétent concerné ait transmis, à l'aide du clavier de l'ordinateur personnel (4; 12; 14) qui lui est affecté, un article de données comportant les informations appropriées à l'élément d'intégration (5), le signal nécessaire émis par l'élément d'intégration (5) est disponible à l'installation téléphonique intelligente (3) et la liaison avec un autre ou tous les appareils téléphoniques est établie, la liaison avec chaque appareil téléphonique impliquant simultanément une intégration immédiate de l'ordinateur personnel affecté à l'appareil téléphonique dans la communication vocale et de données.

3. Circuit selon les revendications 1 ou 2, caractérisé en ce que, lorsqu'une communication vocale ou de données est établie, des données peuvent être transmises par chaque abonné compétent, même pendant la conférence et par tous les abonnés compétents, aussi bien à l'appelant et par l'appelant à chaque abonné compétent qu'entre les abonnés compétents, avec et sans appelant.

4. Circuit selon les revendications 1 à 3, caractérisé en ce qu'en plus de la communication vocale et de données établie, une transmission de fax peut être effectuée, simultanément ou en parallèle, entre l'abonné compétent et l'appelant à l'aide du clavier de l'ordinateur personnel concerné (4; 12; 14), en utilisant la liaison de l'ordinateur personnel concerné (4; 12; 14) avec le réseau téléphonique public RNIS ou Euro RNIS via la ligne (e) avec le RLE (9) intégrant le serveur RLE (10) par la ligne (d), via la ligne (c) avec l'élément d'intégration (5) constitué du système de calculateur (6), du logiciel (7) et de l'élément de liaison SDLC ou RNIS (8) avec le logiciel interne et via la ligne (b) avec l'installation téléphonique intelligente (3).
